(19) Europäisches Patentamt
European Patent Office
Office européen des brevets

(11) **EP 2 889 673 A1**

(12) **EUROPEAN PATENT APPLICATION**

(43) Date of publication:
**01.07.2015 Bulletin 2015/27**

(51) Int Cl.:
***G02F 1/09*** *(2006.01)*

(21) Application number: **14199971.4**

(22) Date of filing: **23.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2013 JP 2013271200**

(71) Applicant: **Shin-Etsu Chemical Co., Ltd.**
**Chiyoda-ku**
**Tokyo 100 (JP)**

(72) Inventors:
• **Akira, Yahagi**
  **Gunma-ken, (JP)**
• **Shinji, Makikawa**
  **Gunma-ken, (JP)**

(74) Representative: **TBK**
**Bavariaring 4-6**
**80336 München (DE)**

(54) **An optical isolator**

(57) An optical isolator for use with a wavelength band of 970 - 990 nm is improved in that it has a Faraday rotator made of an oxide material, which contains by 99 % or more an oxide $(Tb_xR_{1-x})_2O_3$ where $0.5 \leqq x \leqq 1.0$, and R is scandium, yttrium or any lanthanoid but Tb; the resulting Faraday rotator exhibits a Verdet constant of 0.30 min/Oe.cm or greater in the case of the wavelength band of 970 - 990 nm; and a hollow magnet is set to sheathe this Faraday rotator; and the sample length L is from 0.6 cm through 1.0 cm.

Fig. 1

EP 2 889 673 A1

**Description**

The present non-provisional patent application claims priority, as per Paris Convention, from Japanese Patent Application No. 2013-271200 filed on 2013-12-27, the disclosure of which is hereby incorporated by reference herein in its entirety.

FIELD OF THE INVENTION

The present invention relates to an optical isolator designed for use with wavelength bands of 970 nm - 990 nm (herein merely referred to as "980 nm wavelength band"), which are employed in semiconductor lasers for optical measurement, optical sensing, and optical amplification.

BACKGROUND TECHNOLOGY

Conventionally, EDFA (erbium doped fiber amplifier) has been used for optical amplification of a 1.55-micrometer band communication laser, and a light source having a wavelength of 1480 nm or 980 nm is used as the excitation light source for this. The one with a wavelength of 980 nm has a higher amplification ratio than the one with a wavelength of 1480 nm, so that the former is increasingly adopted for practical uses. In recent years, the advent of 1-micrometer band optical amplifier has propagated the use of 980 nm band semiconductor laser among the non-communication fields such as optical measuring instruments, optical sensors and pulse laser amplifiers, which can detect the weak signals from such semiconductor laser. This semiconductor laser has a characteristic of having a narrow emission spectrum and thus has an excellent conversion efficiency; on the other hand, a problem with this semiconductor laser is that it is so sensitive to the reflection return light that, when hit by a return light reflecting from an optical fiber joint interface or an object being measured, it enters in an unstable state.

Hence, in order to operate a semiconductor laser stably, it is necessary to prevent the reflection light from returning to a light emitting device of the laser from which the light has emitted, by installing between the light emitting device and a target body such as an optical fiber an optical isolator having a function of transmitting an outgoing light but stopping a returning light.

However, in order to pass as an effective optical isolator, it ought to have a Faraday rotation angle of 45 or so degrees. In particular, lights input in an optical isolator have their planes of polarization turned by 45 degrees by the Faraday rotator and pass through the input and output polarizers which have been adjusted to have respective angularities. On the other hand, the return light has its plane of polarization turned in the reverse direction by 45 degrees on account of the irreciprocity of the Faraday rotator, and hence it comes to have a plane of polarization which is 90-degree or orthogonally tilted from the angle of the input polarizer, whereby it cannot go through the polarizer. Making use of this phenomenon, the optical isolator allows a light to pass forward but intercepts the light coming backward.

An optical isolator having such function is composed mainly of three elements, namely a Faraday rotator, a pair of polarizers - one on the light entrance side of the Faraday rotator and the other on the light emitting side thereof, and magnet for creating magnetic field in the direction of light transmittance (optical axis direction). In this optical isolator, when a light enters the Faraday rotator, the light's plane of polarization is rotated in the Faraday rotator. This phenomenon is generally called Faraday effect, and the angle by which the plane of polarization is rotated is called Faraday rotation angle, and it is represented in the following equation:

$$\theta = V \times H \times L$$

wherein $\theta$ is Faraday rotation angle, and V is Verdet constant, which is determined by the material of which the Faraday rotator is made and the wavelength of the beam used for the measurement. H is magnetic flux density and L is the length of the Faraday rotator (sample length).

As is understood from the equation presented above, in order to obtain a desired Faraday rotational angle $\theta$ in a Faraday rotator having a certain Verdet constant V, the greater the magnetic flux density H is that is impressed on the Faraday rotator, the smaller may the length L of the rotator be. On the other hand, the greater the length L of the rotator is, the smaller the magnetic flux must be, so that it is possible to reduce the size of an optical isolator making use of this relationship.

Since the determinants that determine the size of an optical isolator include Verdet constant V, which is determined by the kind of the material to make the Faraday rotator and the wavelength of the measurement beam, in addition to the magnetic flux H and the rotator's length L, it is important to develop a material which enables shortening of the Faraday rotator, in order to promote downsizing of the optical isolator.

Heretofore, iron-containing garnet (YIG), which is used in an optical isolator for communication, has been studied to make from it a Faraday rotator for 980-nm wavelength; however absorption of the iron (Fe), which is one of its components, increases in the range of wavelengths of 1 micrometer or shorter, and especially a loss of 1 dB or greater takes place at 980 nm, so that it has come to be considered not a good choice as the material to make a Faraday rotator.

Now, it is conventionally known that TGG, or terbium-gallium-garnet ($Tb_3Ga_5O_{12}$), or the like is a good material to make the Faraday rotator used for wavelengths around 980 nm, for their absorption in that range is low. The Verdet constant of TGG used with wavelength of 980 nm is as small as 0.16 min/Oe.cm, so that in order to secure the function of an optical isolator it is necessary to make the sample length to be 11 mm or greater. As a consequence of this, a problem arises that the dimension of the optical isolator becomes bulky owing to the size of the magnet used. Incidentally, in the above, the term "min" stands for minute and is equivalent to one sixtieth of one degree of angle.

IP Publication 1 discloses an optical isolator for 1-micrometer-wavelength band, which uses a Faraday rotator made of an oxide material containing terbium oxide by 50 % or more and represented by a formula $(Tb_xR_{1-x})_2O_3$ (wherein $0.5 \leq x < 1.0$; R is at least one of scandium, yttrium and lanthanoids excluding Tb) .

However, in this optical isolator for 1-micrometer-wavelength band, its magnetic circuit is composed of a first hollow magnet having a large magnetic flux density, which is arranged around the Faraday rotator, and a second and a third hollow magnet units, which interpose between them the first hollow magnet along the optical axis, in order to maximize the magnetic flux impressed upon the Faraday rotator and thus to achieve downsizing of the isolator. Furthermore, it is so arranged that the magnetic field polarity of the second hollow magnet is opposite to that of the third hollow magnet with respect to a direction normal to the optical axis, and with such an arrangement of the magnet units, there occurs a limit to further downsizing of the optical isolator and the manufacturing operation can become complicated under the circumstances of the current trend of using a semiconductor laser for a 980-micrometer wavelength band, which is shorter than the wavelength of 1 micrometer.

LIST OF PRIOR ART PUBLICATIONS

IP Publications

[IP Publication 1] Japanese Patent No. 5276640

BRIEF DESCRIPTION OF THE INVENTION

[Problems the Invention Seeks to Solve]

The present invention was made in view of these circumstances, and hence it is an object of the present invention to provide an optical isolator, which is further downsized without using the second and the third hollow magnets, through merely combining a Faraday rotator having a high Faraday effect in the case of 980-micrometer wavelength band with an easy-to-make hollow magnet having a dwarfed outer dimension.

In order to attain this object, the present inventors made a wholehearted effort, and came to a conclusion that in the wavelength range of 970 nm - 990 nm it is desirable that the Verdet constant is 0.30 min/Oe.cm or greater in order to secure that the length of the Faraday rotator is 10 mm or smaller, and that if the Verdet constant is smaller than that, the length of the Faraday rotator must be greater than 11 mm in the case of the predetermined magnetic field employed so that it is very difficult to reduce the size of the optical isolator further. Henceforth, the present inventors continued the study and found that an oxide material which contains terbium oxide in an amount of 50 % or greater in terms of mass ratio is suitable as a material that enables Verdet constant to be 0.30 min/Oe.cm or greater in the cases of wavelengths of 970 nm, 980 nm and 990nm, and found that if this oxide material having such high Faraday effect is used to make a Faraday rotator, it is possible to shorten the length of the rotator to 10 mm or smaller; also, the inventors came to realize that it is possible to attain further downsizing through a combination of this Faraday rotator with the easy-to-make hollow magnet having a high magnetic flux density, because the second and third hollow magnets can be dispensed with, and thus they possessed the present invention.

[Means to solve the problem]

In particular, the present invention is about an optical isolator for use with a wavelength band of 970 -990 nm having a Faraday rotator made of an oxide material containing an oxide represented by formula (I) in an amount of 99 % or higher and having a Verdet constant of 0.30 min/Oe.cm or greater in the case of a wavelength band of 970 - 990 nm, and a hollow magnet arranged to surround the Faraday rotator, and the invention is also characteristic in that the sample length L (cm) along which the Faraday rotator is arranged is in a range represented by inequality (1) and that the magnetic flux density B (Oe) impressed on the Faraday rotator is in a range represented by inequality (2)

$$(Tb_xR_{1-x})_2O_3 \qquad (I)$$

wherein $0.5 \leqq x \leqq 1.0$, and R is at least one element selected from scandium, yttrium and any lanthanoid but for Tb;

$$0.6 \leqq L \leqq 1.0 \qquad (1)$$

$$B \leqq 0.5 \times 10^4 \qquad (2).$$

Preferably the oxide of the present invention is in the form of either single crystal or ceramic, and also preferably the Faraday rotator of the present invention has an insertion loss of 1 dB or smaller and an extinction ratio of 30 dB or greater when the sample length L (cm) is as defined in the inequity (1). Furthermore, the hollow magnet of the present invention is preferably a neodymium iron boron-base magnet (Nd-Fe-B system magnet).

[Effects of the Invention]

According to the present invention, it is possible to further downsize the optical isolator by merely using an easy-to-make hollow magnet unit, so that it becomes possible to expand the freedom in spatial dimensioning within the laser equipment in which the inventive optical isolator is incorporated. Also, the length of the Faraday rotator is about a half of that of the conventional TGG Faraday rotator, so that the absorption loss can be decreased and, as a result, the insertion loss, which is an important aspect of the optical isolator, is also decreased.

[Brief Description of Drawings]

[Fig. 1] Fig. 1 is a schematic cross section of an example of an optical isolator of the present invention.
[Fig. 2] Fig. 2 is a graph showing a relation between the sample length L of Faraday rotator (0.6 - 1.0 cm) and the magnitude of the magnetic flux density T ($10^4$ Oe) at which the Faraday rotational angle becomes 45 degrees.
[Fig. 3] Fig. 3 is a simulation chart of magnetic flux density for the purpose of calculating the magnet dimension used in Example 1 and Comparative Example 1.

[Examples to embody the present invention]

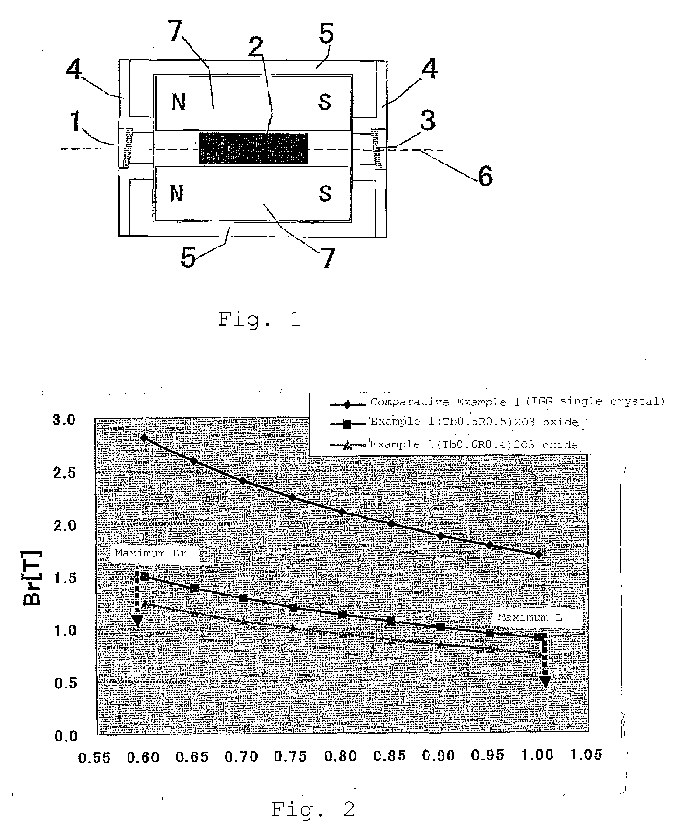

We will now explain an example of how the present invention is embodied, but the scope of the present invention shall not be construed any way limited by the example.
It is recommended that the isolator of the present invention be used for the laser beam of a wavelength band of 980 nm, and such laser includes a semiconductor laser. Incidentally, it is also possible to convert the isolator of the present invention for use with laser beams that have wavelength bands differing from the above-described. Fig. 1 is a schematic cross section of an example of an isolator of the present invention. It is seen in Fig. 1 that an input polarizer 1, a Faraday rotator 2 and an output polarizer 3 are aligned in this order along an optical axis 6 from the beam entrance side (left) to the beam exit side (right). On the beam entrance side the input polarizer 1 is fixed by a polarizer holder 4, and on the beam exit side the output polarizer 3 is fixed by another polarizer holder 4.
The shape of the Faraday rotator 2 is not limited and may be triangular prism, quadrangular prism, but preferably cylindrical; hence in the following example, a cylindrical Faraday rotator 2 is adopted. This cylindrical Faraday rotator 2 is enveloped by an easy-to-make hollow magnet 7 only, and the conventional second and third hollow magnets are not used. As the Faraday rotator 2 is cylindrical, it is preferable that the hollow magnet 7 is in a shape of a hollow cylindrical tube, and it is preferable also that the center line of the Faraday rotator 2 and that of the hollow of the hollow magnet 7 coincide with each other. An outer diameter of the Faraday rotator 2 and the inner diameter of the hollow magnet 7 are close to each other, and it is preferable that the alignment of the axes is done after the assembling of the optical isolator. By this manner of arrangement, the Faraday rotator 2 is positioned in the middle of the hollow magnet 7.
Next, the optical isolator of the present invention has a Verdet constant of 0.30 min/Oe.cm or greater in the case of a wavelength of 980 nm, and this Faraday rotator will be further explained.
It is preferable that the Faraday rotator of the present invention is made of an oxide material containing terbium oxide, which has a Verdet constant of 0.30 min/(Oe.cm) or higher as of a wavelength band of 980 nm, in an amount of 50 % or greater in terms of mass ratio. In particular, said oxide material contains the oxide represented by formula (I) by 99 % or higher, and it may also contain a sintering auxiliary agent:

$$(Tb_xR_{1-x})_2O_3 \qquad (I)$$

wherein $0.5 \leq x \leq 1.1$, and R includes at least one element selected from a group of lanthanoid elements excepting Tb. It is also preferable that the content of this oxide is 99.9 mass % or higher, and more preferably it is 100 mass %.

In a case wherein such a single crystal oxide is used to make a Faraday rotator for an optical isolator, it is preferable that its cut faces are mirror-finished with a polishing agent or the like. The polishing agent may be any abrasive compound such as colloidal silica.

In the present invention, the Verdet constant is not limited in particular so long as it is not lower than 0.30 min/(Oe.cm), but it cannot be higher than the value which is reached when the content of the terbium oxide is 100 %. The Verdet constant should be 0.30 min/(Oe.cm) or higher, or else the length of the Faraday rotator that secures the Faraday rotational angle of 45 degrees becomes so great that the downsizing of the optical isolator becomes difficult. The Verdet constant may be measured by a conventional method, and there is no particular requirement for the purpose of this invention. In other words, a piece of oxide having a predetermined thickness is cut out, mirror-polished, and the resultant Faraday rotator is set in an eternal magnet piece having a known magnitude of magnetic flux density, and the Verdet constant in the case of 980 nm wavelength band is measured in the atmosphere at a temperature of 25 plus/minus 10 degrees C.

Concrete examples of the composition of the $(Tb_xR_{1-x})_2O_3$ of the present invention are listed in Table 1 together with their Verdet constants.

[Table 1]

|  | composition | | |
| --- | --- | --- | --- |
|  | $(Tb_xSC_{1-x})_2O_3$ | $(Tb_xY_{1-x})_2O_3$ | $(Tb_xLu_{1-x})_2O_3$ |
| Verdet constant when x = 0.5 [min/(Oe.cm)] | 0.30 - 0.31 | 0.30 - 0.31 | 0.30 - 0.31 |
| Verdet constant when x = 0.6 [min/(Oe.cm)] | 0.35 - 0.37 | 0.35 - 0.37 | 0.35 - 0.37 |

It is also preferable in the present invention that the sample length L (cm) along which the Faraday rotator is set satisfies the following inequality (1):

$$0.6 \leq L \leq 1.0 \qquad (1).$$

If the sample length exceeds 1.0 cm, it becomes difficult to further downsize the isolator, and if it is smaller than 0.6 cm, the required magnetic flux density that secures the desired Faraday rotational angle becomes so great that, again, furthering of the isolator downsizing becomes difficult.

The Faraday rotator of the present invention preferably has an insertion loss of 1 dB or smaller and an extinction ratio of 30 dB or greater when the sample length L is as defined in the inequity (1). If the sample length L satisfies the inequality (1), it becomes possible to manufacture an optical isolator which is equipped with preferable optical properties of low loss and high isolation.

Incidentally, the optical properties such as insertion loss and extinction ratio were measured in accordance with conventional methods in the atmosphere at a temperature of 25 plus/minus 10 degrees C using a wavelength band of 980 nm.

It is also preferable that the Faraday rotator of the present invention has a transmittance (optical transmittance) of 80 % or higher when measured with a wavelength of 633 nm and the sample length L (cm) in the range of $0.6 \leq L \leq 1.1$, and it is more preferable if 82 % or higher, and even more preferable if 85 % or higher. The higher the transmittance is, the greater the result, and therefore its upper limit is 100 %.

It is also preferable that the Faraday rotator of the present invention has a transmittance (optical transmittance) of 80 % or higher when measured with a wavelength band of 970 - 990 nm and the sample length L (cm) in the range of $0.6 \leq L \leq 1.0$, and it is more preferable if 82 % or higher, and even more preferable if 85 % or higher. The higher the transmittance is, the greater the result, and therefore its upper limit is 100 %.

The transmittance is determined based on the intensity of transmitted beam as a beam of a wavelength band of 980 mm is transmitted through a Faraday rotator having a thickness of L (cm). In particular the transmittance is obtained by the following equation:

$$Transmittance = I/Io \times 100$$

wherein I is the intensity of the transmitted beam [the intensity of the beam that has passed through a sample of a thickness of L (cm)], and Io is the intensity of the incident beam. Incidentally, if the transmittance values of an oxide material as obtained are not uniform so that the values of the transmittance vary with the locations of the measurement, the transmittance of the oxide is determined to be an average of the transmittance values obtained at ten arbitrary locations.

Next, we will explain about the hollow magnet 7 which is used in the optical isolator of the present invention. It is preferable that the size of the hollow magnet 7 is the smallest possible, and it is an eternal magnet.; in order to secure a large magnetic field strength it is preferred that a neodymium iron boron-base magnet (Nd-Fe-B system magnet) is used; and preferably a carbon steel case is used to contain the magnet. If the hollow magnet 7 is contained in the carbon steel case, in effect a virtual yoke is formed around the hollow magnet 7 so that the adsorptive power or the attractive force of the hollow magnet 7 is magnified.

Preferably, the hollow magnet 7 of the present invention has its magnetic field polarity in the direction of the optical axis 6, as shown in Fig. 1, and also preferably a holder 5 made of a metal such as carbon steel is provided to surround the hollow magnet 7 so as to function as a yoke. By arranging in this manner it becomes possible to maximize the magnetic flux density impressed to the Faraday rotator 2.

The base design policy of the optical isolator of the present invention is to shorten the length of the Faraday rotator 2 to downsize the optical isolator so that it is important that a Faraday rotator 2 having a high Faraday effect is combined with a hollow magnet 7 having a large magnetic flux density.

The magnitude of an optical damage, which is caused upon the Faraday rotator 2 by high power beam - a problem that is incurred when a semiconductor laser is used for an optical isolator - is determined by the transmittance and the length L of the Faraday rotator 2, so that in order to mitigate this optical damage it is more preferable that the transmittance of the Faraday rotator 2 is higher and the length L is shorter.

Furthermore, it is preferable in the optical isolator of the present invention that two or more polarization-dependent type glass polarizers are arranged on the optical axis, for by virtue of this construction it is possible to obtain a polarization-dependent type optical isolator. It is still more preferable that two or more pieces of flat plate birefringent crystal and one or more pieces of 45-degree azimuth rotator are provided on the optical axis 6, for by doing so it is possible to impart to the resulting isolator a polarization-independency as well.

And in this case, it is preferable that the optical axis of the plate birefringent crystal is about 45 degrees askew from the optical axis 6, and that its thickness is 1.0 cm or greater. For example, when a rutile single crystal ($TiO_2$) is used, the isolator will be capable of accommodating to a beam of a diameter of up to 1.0 mm, which is one tenth of the thickness, and when an alpha-BBO crystal ($BaB_2O_4$) is used, the isolator will be capable of accommodating to a beam of a diameter of up to 0.3 mm, which is one thirtieth of the thickness.

[Examples]

Herein below, we will explain about the examples of the present invention.

<Example 1 >

In Example 1, an optical isolator of 980 nm band having a structure as shown in Fig. 1 was made. An absorption type glass polarizer having a high transparency and a high extinction ratio in the 980 nm band was used to make an input polarizer 1 and an output polarizer 3, and an antireflective film having a central wavelength of 980 nm was adhered to the beam transmittance face, and in order to prevent the reflected beam from returning from the beam transmittance face to the incident beam path, metallic holders 5 are inserted by bonding them onto a polarizer holder 4, which has a tilt angle of 5 degrees, at the four corners of the bottom face of the polarizer.

Then, the Faraday rotator 2 was fixed in the middle of the hollow of the hollow magnet 7 after adjusting its position to where the magnetic field distribution created by the magnet becomes greatest. The input polarizer 1 and the output polarizer 3, which are arranged in this progressive order along the progressive path of the incident beam, are adjusted such that their optical axes are directed in such directions that a maximum isolation property is obtained when the beam passing through the Faraday rotator 2 is twisted by the polarization angle of 45 degrees; thereupon the outer connective parts of the polarizer holders 4 and the metallic holders 5 were welded and fixed by laser. An antireflective film (not shown in drawings) having a central wavelength of 980 mm was applied to the beam transmittance faces of the Faraday rotator 2.

As for the material to make such a Faraday rotator, a terbium/scandium oxide, a terbium/yttrium oxide, and terbium/lutetium oxide were used, which give rise to a Verdet constant of 0.36 min/Oe.cm or greater in the case of wavelength band of 980 nm. Also, the optical passage length L of this Faraday rotator 2 was made 0.7 cm, and the hollow magnet 7 consisting of a neodymium iron boron-base magnet (Nd-Fe-B system magnet) was placed to surround the Faraday rotator 2, and the carbon steel case was provided to encase these.

We will explain the further details of the Faraday rotator 2 of Example 1; a ceramics consisting of a terbium/scandium oxide containing terbium oxide by 60 wt% was used to make the Faraday rotator 2. The optical properties of this ceramics were measured with respect to 980 nm wavelength band: the insertion loss was 0.1 dB, the extinction ratio was 42 dB, and the Verdet constant was 0.36 min/(Oe.cm). The dimension of the cylindrical sample used for the measurement was 0.3 cm in outer diameter and 0.70 cm in length.

Fig. 2 shows, with respect to the terbium/scandium oxide containing terbium oxide by 60 wt% used in Example 1 and the terbium/scandium oxide containing terbium oxide by 50 wt%, a relation between the magnetic flux density T ($10^4$ Oe) and the sample length L (cm) the respective combination of which brings about the Faraday rotational angle of 45 degrees, as plotted in the cases of the sample length L whose value is increased stepwise by 0.05 cm from 0.6 through 1.0 cm.

Then, in the case of the Faraday rotator 2 of Example 1, the sample length L being 0.70 cm and the Verdet constant of the Faraday rotator 2 being 0.36 min/(Oe.cm), it is found from the relation in Fig. 2 that the magnetic flux density which gives rise to the Faraday rotational angle of 45 degrees is to be about 10,700 [Oe] or 1.07 [T].

Also, in the present invention, the lower limit for the Verdet constant is 0.30 min/Oe.cm, and to stay above this lower limit the material used to make the Faraday rotator 2 ought to be an oxide material which contains terbium oxide by at least 50 % in terms of mass ratio. And, as the lower limit for the sample length L is 0.6 cm, the upper limit for the magnetic flux density of this oxide material is to be $1.5 \times 10^4$ [Oe] (=0.50[T]) in the case of a sample length L being 0.6 cm, as figured out from the relation shown in Fig. 2. Therefore, for the purpose of furthering the downsizing of optical isolators, it is preferable that the magnet used in the present invention has a magnetic flux density B (Oe) that satisfies the following inequality (2):

$$B \leq 1.5 \times 10^4 \qquad (2).$$

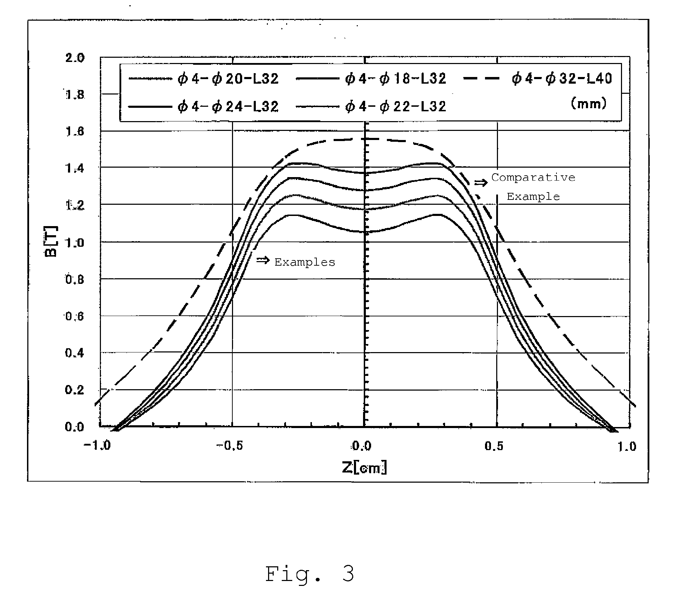

Next, the dimension of the magnet that would secure the magnetic flux density of Example 1 will be explained: the magnet dimension was obtained through electromagnetic field analysis in the following manner. In particular, a finite element method (JMAG-Designer) was adopted as the electromagnetic field analysis, and a neodymium iron boron-base magnet (Nd-Fe-B system magnet) manufactured by Shin-Etsu Chemical Co., Ltd. was used as the material to make the magnet, and a carbon steel was chosen as the material to make the metallic holder 5. Then, the inner diameter of the magnet was made 0.4 cm, and Fig. 3 shows a result of a simulation of magnetic flux density distribution which was obtained with respect to different outer diameters (cm) as the parameter.

From the results shown in Fig. 3, it was found that the dimension of the magnet that gives rise to a magnetic flux density distribution which corresponds to the wave path length L of 0.70 cm of Example 1 is 0.4 cm in inner diameter, 1.8 cm in outer diameter, and 3.2 cm in length. In Fig. 3, Z [mm] is a distance from the center of the optical axis 6, and the sample length L [cm] is obtained by a calculation of 2 x Z/10.

Then, an optical isolator was assembled within the wavelength band of 980 nm, and it turned out an optical isolator having optical properties of 0.2 [dB] in insertion loss and 42 [dB] in isolation.

<Comparative Example>

Now we turn to a comparative example. In Comparative Example 1, an optical isolator having a Faraday rotator made of a single crystal TGG (Verdet constant being 0.16 min/(Oe.cm)) was made. The magnetic flux density required to be impressed to this TGG single crystal was calculated to be about 24,100 [Oe] (= 2.41 [T]) when the sample length is 0.7 cm. Now, this magnetic flux density is exceedingly great, and a size of the magnet that satisfies this would be unrealistic, so that the sample length was doubled to 1.4 cm, and the size of the magnet that would give rise to a magnetic flux density of about 12,000 [Oe] (= 1.20 [T]), which is a half of the above-mentioned value, was calculated from the equation $\theta$ = v x H x L, appearing in [0005]. The result of doing simulation with this magnetic flux density distribution is shown in Fig. 3.

According to the result shown in Fig. 3, it was found that the dimension of the magnet that gives rise to a magnetic flux density in Comparative Example 1 is 0.4 cm in inner diameter, 3.2 cm in outer diameter, and 4.0 cm in length. In Fig. 4, Z [mm] is a distance from the center of the optical axis 6, and the sample length L [cm] is obtained by a calculation of 2 x Z/10.

Based on the results as obtained above, a comparison was made between Example 1 and Comparative Example 1, and it was found that the optical isolator of Example 1 is downsized to an extent that its volume is 75 % of the TGG optical isolator of Comparative Example 1. This volume ratio was calculated from the outer diameters and the lengths of the magnets of the examples.

Hence, it was confirmed that the optical isolator of the present invention is practically useful as a well downsized optical isolator, having the properties of low loss and high isolation in the range of 980 nm wavelength band.

[Representation of reference numerals]

1:    input polarizer
2:    Faraday rotator
3:    output polarizer
4:    polarizer holder
5:    metallic holder
6:    optical axis
7:    hollow magnet

An optical isolator for use with a wavelength band of 970 - 990 nm is improved in that it has a Faraday rotator made of an oxide material, which contains by 99 % or more an oxide $(Tb_xR_{1-x})_2O_3$ where $0.5 \leqq x \leqq 1.0$, and R is scandium, yttrium or any lanthanoid but Tb; the resulting Faraday rotator exhibits a Verdet constant of 0.30 min/Oe.cm or greater in the case of the wavelength band of 970 - 990 nm; and a hollow magnet is set to sheathe this Faraday rotator; and the sample length L is from 0.6 cm through 1.0 cm.

**Claims**

1. A optical isolator for use with a wavelength band of 970 - 990 nm having a Faraday rotator made of an oxide material containing an oxide represented by formula (I) in an amount of 99 % or higher and having a Verdet constant of 0.30 min/Oe.cm or greater in the case of the wavelength band of 970 - 990 nm, and a hollow magnet arranged to surround the Faraday rotator,
wherein a sample length L (cm) along which the Faraday rotator is arranged is in the range represented by an inequality (1) and that the magnetic flux density B (Oe) impressed on the Faraday rotator is in the range represented by inequality (2)

$$(Tb_xR_{1-x})_2O_3 \qquad (I)$$

wherein $0.5 \leqq x \leqq 1.0$, and R is at least one element selected from scandium, yttrium and any lanthanoid but Tb;

$$0.6 \leqq L \leqq 1.0 \qquad (1)$$

$$B \leqq 1.5 \times 10^4 \qquad (2).$$

2. An optical isolator as claimed in Claim 1, wherein said oxide is in a form of single crystal or ceramic.

3. An optical isolator as claimed in Claim 1 or 2, wherein said Faraday rotator has an insertion loss of 1 dB or lower and an extinction ratio of 30 dB or higher when said sample length L satisfies inequity (1).

4. An optical isolator as claimed in Claim 1 or 2, wherein said hollow magnet is made of a neodymium iron boron-base magnet.

Fig. 1

Fig. 2

Fig. 3

**Europäisches Patentamt**
**European Patent Office**
**Office européen des brevets**

## EUROPEAN SEARCH REPORT

Application Number

EP 14 19 9971

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 500 763 A1 (SHINETSU CHEMICAL CO [JP]) 19 September 2012 (2012-09-19) * claims 1-6 * ----- | 1-4 | INV. G02F1/093 |
| E | EP 2 824 505 A1 (SHINETSU CHEMICAL CO [JP]) 14 January 2015 (2015-01-14) * claims 1-4 * ----- | 1-4 | |

TECHNICAL FIELDS SEARCHED (IPC)

G02F
C30B

The present search report has been drawn up for all claims

| Place of search | Date of completion of the search | Examiner |
|---|---|---|
| The Hague | 10 April 2015 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 889 673 A1**

## ANNEX TO THE EUROPEAN SEARCH REPORT
## ON EUROPEAN PATENT APPLICATION NO.

EP 14 19 9971

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2015

| Patent document cited in search report | | Publication date | Patent family member(s) | | Publication date |
|---|---|---|---|---|---|
| EP 2500763 | A1 | 19-09-2012 | CN | 103309060 A | 18-09-2013 |
| | | | EP | 2500763 A1 | 19-09-2012 |
| | | | JP | 2012208490 A | 25-10-2012 |
| | | | US | 2012236409 A1 | 20-09-2012 |
| EP 2824505 | A1 | 14-01-2015 | CA | 2855784 A1 | 12-01-2015 |
| | | | CN | 104280901 A | 14-01-2015 |
| | | | EP | 2824505 A1 | 14-01-2015 |
| | | | JP | 2015018145 A | 29-01-2015 |
| | | | US | 2015015947 A1 | 15-01-2015 |

EPO FORM P0459

For more details about this annex : see Official Journal of the European Patent Office, No. 12/82

12

**EP 2 889 673 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013271200 A

- JP 5276640 B